# EUROPÄISCHE PATENTSCHRIFT

(11) **EP 3 772 520 B1**
(45) Veröffentlichungstag und Bekanntmachung des Hinweises auf die Patenterteilung: **12.07.2023**
(21) Anmeldenummer: 19191017.3
(22) Anmeldetag: 09.08.2019
(51) Int. Cl.: C08G 69/26, C08K 7/14, C08K 3/34, C08K 3/04, C08K 3/014

(54) **POLYAMID-FORMMASSE UND DEREN VERWENDUNG SOWIE AUS DER FORMMASSE HERGESTELLTE FORMKÖRPER**
POLYAMIDE MOULDING COMPOUND AND USE THEREOF AND MOULDED BODIES PRODUCED FROM SAID MOULDING COMPOUND
MASSE DE FORMAGE EN POLYAMIDE ET SON UTILISATION, AINSI QUE CORPS MOULÉ FABRIQUÉ À PARTIR DE LA MASSE DE FORMAGE

(43) Veröffentlichungstag der Anmeldung: 10.02.2021
(73) Patentinhaber: EMS-CHEMIE AG, 7013 Domat/Ems (CH)
(72) Erfinder: HARDER, Philipp, 7000 Chur (CH); SCHUBERT, Christian, 7013 Domat/Ems (CH); EBLING, Ronny, 7013 Domat/Ems (CH)
(74) Vertreter: Pfenning, Meinig & Partner mbB

(56) Entgegenhaltungen:
- EP-A1- 3 309 199
- EP-A1- 3 392 290
- GB-A- 1 433 144

## Beschreibung

Die vorliegende Erfindung betrifft Polyamid-Formmassen, die ein teilkristallines Copolyamid, mindestens einen Füllstoff und ggf. Zusatzstoffe enthalten. Ebenso betrifft die Erfindung aus diesen Formmassen hergestellte Formkörper und die Verwendung der Formmassen zur Herstellung von Formkörpern.

Aus dem Stand der Technik ist eine Vielzahl von Polyamidformmassen bekannt, wobei die Zusammensetzung der Formmassen an ihr gewünschtes Eigenschaftsprofil angepasst ist. Insbesondere bei verstärkten Polyamidformmassen soll neben vorteilhaften mechanischen Eigenschaften auch eine glänzende und glatte Oberfläche bei daraus hergestellten Formkörpern ermöglicht werden. Hierbei sollen die verarbeitungstechnischen Eigenschaften der Formmassen nicht beeinträchtigt werden. Allerdings ist bei glasfaserverstärkten Spritzguss-Produkten die Oberfläche der Formteile häufig durch Unebenheiten, Unregelmäßigkeiten bzw. durch den Glasfasereffekt matt und rau. Bei Sichtformteilen, die oft für das Design eines Körpers relevant sind, ist dieser Effekt jedoch im Allgemeinen unerwünscht.

Die Oberflächenqualität eines Spritzgussteils wird unter anderem durch das Kristallisationsverhalten des Copolyamids beeinflusst. Hohe Temperaturen des Spritzgusswerkzeugs können dabei zwar die Oberflächenqualität verbessern, verlängern jedoch auch die Kühlzeit bis zum Erreichen der Entformungstemperatur.

Aus GB 1 433 144 sind transparente Polyamide bekannt, aus den Formkörper bei relativ hohen Temperaturen herstellbar sind, ohne die guten mechanischen Eigenschaften zu verlieren. Es handelt sich hierbei um amorphe Polyamide, die aus einem Gemisch aus 1,3-Bis(aminomethyl)-cyclohexan sowie einem aliphatischen Diamin sowie einer Mischung aus einer aromatischen und einer aliphatischen Dicarbonsäure gebildet sind. Die Oberflächeneigenschaften der aus diesen Formmassen hergestellten Formkörper wird in dieser Druckschrift nicht angesprochen.

Aus GB 1 351 898 sind Fasern aus einem Blend aus einem Homopolyamid (PA 6 oder PA 66) und einem Copolyamid, das zu über 80 Gew.-% aus den Monomeren des Homopolyamids und zu weniger als 20 Gew.-% aus 1,3-Bis(aminomethyl)-cyclohexan und 1,6-Hexandiamin gebildet ist. Als Carbonsäuren werden sowohl aliphatische als auch aromatische Dicarbonsäuren eingesetzt. Diese Fasern eignen sich besonders für die Herstellung textiler Materialien.

Aus der EP 1 182 228 A1 sind Polyamidharz-Zusammensetzungen mit einem guten Fertigungszyklus aufgrund verkürzter Kristallisationszeit bekannt. Hieraus hergestellte Formkörper zeigen gute mechanische Eigenschaften bei Temperaturen von 100° C oder oberhalb hiervon. Hierfür wird ein Copolyamidharz eingesetzt, wobei ein Diamin-Bestandteil 1,4-Bis(aminomethyl)-cyclohexan und ein weiterer Diamin-Bestandteil p-Xylylendiamin oder Hexamethylendiamin und als Dicarbonsäure-Bestandteil Adipinsäure eingesetzt wird. Weiterhin enthält die Formmasse Nukleierungsmittel.

Aus EP 3 309 199 A1 sind Glasfüller verstärkte, optional teilkristalline PolyamidFormmassen, welche sowohl gute mechanische als auch optische Eigenschaften aufweisen, bekannt. Diese werden aus Gemischen von 1,6-Hexandiamin, 4,4'Methylen-bis(2-methylcyclohexanamin), 4,4'Methylen-bis(cyclohexylamin), Isophtalsäure, Terephtalsäure und Laurinlactam hergestellt.

Aus EP 3 392 290 A1 sind Polyamide aus Gemischen von 1,6-Hexandiamin, 1,3-/1,4-Bis(aminomethyl)-cyclohexan, Terephtalsäure und Adipinsäure bekannt.

Ausgehend hiervon war es Aufgabe der vorliegenden Erfindung, Polyamid-Formmassen bereitzustellen, die die Herstellung von Formkörpern erlauben, die neben einer hohen Steifigkeit sehr gute optische Eigenschaften aufweisen.

Diese Aufgabe wird durch die Polyamid-Formmasse mit den Merkmalen des Anspruchs 1 und die Formkörper mit den Merkmalen des Anspruchs 12 gelöst. In Anspruch 14 werden erfindungsmäße Verwendungen angegeben.

Erfindungsgemäß werden Polyamid-Formmassen bereitgestellt, die die folgenden Komponenten (A) bis (C) enthalten oder aus diesen bestehen:
(A) 22 bis 70 Gew.-% eines teilkristallinen Copolyamids gebildet aus den Monomeren (a1) bis (a5):
   (a1) 20 bis 37,5 Mol-% 1,6-Hexandiamin;
   (a2) 12,5 bis 25 Mol-% 1,3-Bis(aminomethyl)-cyclohexan;
   (a3) 0 bis 5 Mol-% mindestens ein Diamin mit 2 bis 35 Kohlenstoffatomen, verschieden von den Monomeren (a1) und (a2);
   (a4) 45 bis 50 Mol-% 1,6-Hexandisäure;
   (a5) 0 bis 5 Mol-% mindestens eine Dicarbonsäure mit 2 bis 44 Kohlenstoffatomen, verschieden von dem Monomer (a4);
   wobei die Anteile der Monomere (a1), (a2) und (a3) auf die Summe der eingesetzten Diamine bezogen sind und sich auf 50 Mol-% ergänzen; und
   wobei die Anteile der Monomere (a4) und (a5) auf die Summe der eingesetzten Dicarbonsäuren bezogen sind und sich auf 50 Mol-% ergänzen; und
   wobei sich die Monomere (a1) bis (a5) auf 100 Mol-% ergänzen;
(B) 30 bis 70 Gew.-% mindestens eines Füllstoffes; und
(C) 0 bis 8 Gew.-% mindestens eines Zusatzstoffes;
wobei die Komponente (C) verschieden von Komponente (B) ist und wobei sich die Mengenanteile der Komponenten (A) bis (C) auf 100 Gew.-% ergänzen.

### Begriffsdefinitionen

### • Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor 1,3-BAC für 1,3-Bis(aminomethyl)-cyclohexan (auch als 1,3-Cyclohexandimethanamin bezeichnet, CAS-Nr. 2579-20-6), 1,4-BAC für 1,4-Bis(aminomethyl)-cyclohexan (auch als 1,4-Cyclohexandimethanamin bezeichnet, CAS-Nr. 2549-93-1), IPD für Isophorondiamin (auch als 3-(Aminomethyl)-3,5,5-trimethylcyclohexanamin, 1-Amino-3-aminomethyl-3,5,5-trimethylcyclohexan oder Cyclohexanmethanamin,5-amino-1,3,5,5-trimethyl- bezeichnet, CAS-Nr. 2855-13-2), MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), 6 für 1,6-Hexandiamin (CAS-Nr. 124-09-4), T für Terephthalsäure (CAS-Nr. 100-21-0), I für Isophthalsäure (CAS-Nr. 121-95-5), 6 für 1,6-Hexandisäure (CAS-Nr. 124-04-9).

### • Allgemeines zu den Zusammensetzungen

Die Begriffe "enthaltend" und "umfassend" in den vorliegenden Ansprüchen und in der Beschreibung bedeuten, dass weitere Komponenten nicht ausgeschlossen sind. Im Rahmen vorliegender Erfindung ist der Begriff "bestehend aus" als bevorzugte Ausführungsform der Begriffe "enthaltend" oder "umfassend" zu verstehen. Wenn definiert wird, dass ein Gruppe mindestens eine bestimmte Anzahl von Komponenten "enthält" oder diese "umfasst", ist dies auch so zu verstehen, dass eine Gruppe offenbart wird, die vorzugsweise aus diesen Komponenten "besteht".

### • Allgemeines zu den Mengenangaben

Die Polyamid-Formmassen gemäß der vorliegenden Erfindung enthalten oder bestehen aus den Komponenten (A) und (B) sowie gegebenenfalls (C), es gilt dabei die Maßgabe, dass sich die Komponenten (A), (B) und (C) in Summe auf 100 Gew.-% ergänzen. Die festgelegten Bereiche der Mengenangaben für die einzelnen Komponenten (A), (B) und (C) sind so zu verstehen, dass innerhalb der vorgegebenen Bereiche eine willkürliche Menge für jede der Einzelkomponenten ausgewählt werden kann, sofern die Maßgabe erfüllt wird, dass die Summe aller Komponenten (A) bis (C) 100 Gew.-% ergibt.

### • Teilkristalline Copolyamide

Im Sinne der vorliegenden Erfindung sind teilkristalline Copolyamide solche Copolyamide, die einen Schmelzpunkt besitzen, und/oder solche Copolyamide, die in der dynamischen Differenz-Kalorimetrie (engl. Differential Scanning Calorimetry, DSC) nach ISO 11357-3 (2013) bei einer Aufheizrate von 20 K/min bevorzugt eine Schmelzwärme von mehr als 4 J/g aufweisen.

### Polyam id-Form masse

Die erfindungsgemäße Polyamid-Formmasse enthält die Komponenten (A) und (B) und gegebenenfalls die Komponente (C) oder besteht aus diesen.

Der Anteil von Komponente (A) in der Polyamid-Formmasse liegt bevorzugt im Bereich von 29 bis 64,9 Gew.-%, besonders bevorzugt im Bereich von 36 bis 59,8 Gew.-%, bezogen auf das Gesamtgewicht der Polyamid-Formmasse.

Der Anteil von Komponente (B) in der Polyamid-Formmasse liegt bevorzugt im Bereich von 35 bis 65 Gew.-%, besonders bevorzugt im Bereich von 40 bis 60 Gew.-%, bezogen auf das Gesamtgewicht der Polyamid-Formmasse.

Der Anteil von Komponente (C) in der Formmasse liegt bevorzugt im Bereich von 0,1 bis 6 Gew.-%, besonders bevorzugt von 0,2 bis 4 Gew.-%, bezogen auf das Gesamtgewicht der Polyamid-Formmasse.

Das Verhalten von Polyamid-Formmassen bei der thermoplastischen Verarbeitung zu Formteilen mittels Spritzguss oder Extrusion wird durch eine Reihe von thermischen Eigenschaften der Formmasse beinflusst.

Wesentlichen Einfluss auf die Wirtschaftlichkeit des Spritzgussprozesses hat die Zykluszeit. Limitierend ist die Abkühlzeit der Formmasse im Werkzeug bis die Teile stabil genug sind, dass sie sich ohne Deformation oder Auswerferabdrücke entformen lassen. Idealerweise sollte die Formmasse innerhalb der Abkühlzeit im Werkzeug auch vollständig auskristallisieren. Eine verzögerte Kristallisation nach der Entformung führt zu Schwindung und Verzug. Schnell kristallisierende Formmassen zeichnen sich durch eine hohe Kristallisationsgeschwindigkeit und damit eine kurze Zykluszeit aus.

Ein niedriger Schmelzpunkt spart Energie, da die Massetemperatur niedriger sein kann. Gleichzeitig wird dem thermischen Abbau und der damit verbundenen Verfärbung der Formmasse vorgebeugt.

Gleichzeitig dürfen Kristallisationstemperatur und -geschwindigkeit aber nicht so hoch sein, dass die Formmasse beim Kontakt mit der kalten Werkzeugoberfläche sofort erstarrt. Für eine präzise Abformung der Oberfläche ist eine wirksame Nachdruckphase ohne vorschnelles Erstarren der Formmasse nötig. Die erfindungsgemäßen Formmassen erreichen bei üblichen Wanddicken eine sehr gute Oberfläche mit guter Kristallinität innerhalb der durch die Wärmeleitfähigkeit der Polyamid-Formmasse vorgegebenen Mindestkühlzeit.

Zudem ist eine hohe Steifigkeit der Formkörper erwünscht, die sich durch einen hohen Zug-E-Modul ausgedrückt.

Für eine hochglänzende Oberfläche muss die Werkzeugtemperatur grundsätzlich höher als die Glasübergangstemperatur sein. Zu hohe Werkzeugtemperaturen verlängern die Kühlzeit jedoch unnötig und können zu Kleben und Abhebemarkierungen an der Teileoberfläche führen.

Zu beachten ist auch, dass bei Werkzeugtemperaturen von 190 bis 200 °C Wasser als Heizmedium durch ein Wärmeträgeröl ersetzt werden muss. Zusätzlich sind dann teure konstruktive Maßnahmen nötig. Sowohl lange Zykluszeiten als auch zusätzliche Kosten für die Werkzeugtemperierung sind nachteilig für die Formmasse, da sie die Kosten der daraus gefertigten Teile erhöhen.

Die erfindungsgemäßen Polyamid-Formmassen weisen bevorzugt eine Glasübergangstemperatur im Bereich von 50 bis 200 °C, besonders bevorzugt im Bereich von 60 bis 190 °C, ganz besonders bevorzugt im Bereich von 65 bis 90 °C auf.

Die erfindungsgemäßen Polyamid-Formmassen weisen bevorzugt eine Schmelztemperatur im Bereich von 100 bis 260 °C, besonders bevorzugt im Bereich von 205 bis 245 °C, ganz besonders bevorzugt im Bereich von 210 bis 235 °C auf.

Die erfindungsgemäßen Polyamid-Formmassen weisen bevorzugt eine Kristallisationstemperatur im Bereich von 130 bis 200 °C, besonders bevorzugt im Bereich von 140 bis 200 °C auf.

Die erfindungsgemäßen Polyamid-Formmassen weisen bevorzugt eine Kristallisationsgeschwindigkeit im Bereich von 12 bis 50J/g min aufweisen, besonders bevorzugt im Bereich von 15 bis 47 J/g min, ganz besonders bevorzugt im Bereich von 23 bis 45 J/g min.

Ein aus der Polyamid-Formmasse hergestellter Formkörper weist vorzugsweise einen Zug-E-Modul bestimmt nach ISO 527 von mindestens 5000 MPa, bevorzugt mindestens 8000 MPa, besonders bevorzugt mindestens 12000 MPa auf.

Ein aus der Polyamid-Formmasse hergestellter Formkörper weist an der Oberfläche bevorzugt einen Glanzwert bei 60° im trockenen Zustand, bestimmt nach DIN EN 2813 (2015), von 70 bis 100 GU auf.

Ein aus der Polyamid-Formmasse hergestellter Formkörper weist an der Oberfläche bevorzugt einen Glanzwert bei 60° im konditionierten Zustand, bestimmt nach DIN EN 2813 (2015), von 60 bis 100 GU auf.

Die erfindungsgemäßen Polyamid-Formmassen bzw. die daraus hergestellten Formkörper können bevorzugt eine oder mehrere, besonders bevorzugt alle der zuvor genannten Eigenschaften (Glasübergangstemperatur, Schmelztemperatur, Kristallisationstemperatur, Kristallisationsgeschwindigkeit, Zug-E-Modul und Glanzwerte) aufweisen.

### Komponente (A)

Der Anteil an Monomer (a1) im teilkristallinen Copolyamid (Komponente (A)) liegt bevorzugt im Bereich von 20 bis 35 Mol-%, besonders bevorzugt im Bereich von 22,5 bis 32,5 Mol-%, ganz besonders bevorzugt im Bereich von 25 bis 32,5 Mol-% . Der Anteil an Monomer (a2) im teilkristallinen Copolyamid liegt bevorzugt im Bereich von 15 bis 25 Mol-%, besonders bevorzugt im Bereich von 17,5 bis 22,5 Mol-%. Der Anteil an Monomer (a3) im teilkristallinen Copolyamid liegt bevorzugt im Bereich von 0 bis 2,5 Mol-%. Dabei beziehen sich die Anteile der Monomere (a1), (a2) und (a3) auf die Summe der eingesetzten Diamine und ergänzen sich auf 50 Mol-%.

Der Anteil an Monomer (a4) im teilkristallinen Copolyamid liegt bevorzugt im Bereich von 47,5 bis 50 Mol-%. Der Anteil an Monomer (a5) im teilkristallinen Copolyamid liegt bevorzugt im Bereich von 0 bis 2,5 Mol-%. Dabei beziehen sich die Anteile der Monomere (a4) und (a5) auf die Summe der eingesetzten Dicarbonsäuren und ergänzen sich auf 50 Mol-%.

Das mindestens eine Monomer (a3) ist vorzugsweise ausgewählt aus der Gruppe bestehend aus Ethylendiamin, Butandiamin, Pentandiamin, Methylpentandiamin, 1,8-Octandiamin, Methyloctandiamin, 1,9-Nonandiamin, 1,10-Decandiamin, 1,11-Undecandiamin, 1,12-Dodecandiamin, Trimethylhexamethylendiamin, 1,4-Ccyclohexandiamin, 1,3-Cyclohexandiamin, Bis-(4-amino-3-methyl-cyclohexyl)-methan, Bis-(4-amino-cyclohexyl)-methan, Isophorondiamin, 1,4-Bis(aminomethyl)-cyclohexan, m-Xylylendiamin, p-Xylylendiamin, Bis(aminocyclohexyl)propan und seinen Alkylderivaten, Norbornandiamin und Bis(aminomethyl)norbornan.

Eine weitere bevorzugte Gruppe aus der das mindestens eine Monomer (a3) ausgewählt ist, besteht aus Pentandiamin, Methylpentandiamin, Methyloctandiamin, 1,9-Nonandiamin, 1,10-Decandiamin, 1,12-Dodecandiamin, Trimethylhexamethylendiamin, Bis-(4-amino-3-methyl-cyclohexyl)-methan, Bis-(4-amino-cyclohexyl)-methan, Isophorondiamin, 1,4-Bis(aminomethyl)-cyclohexan, m-Xylylendiamin und p-Xylylendiamin.

Besonders bevorzugt, ist das mindestens eine Monomer (a3) ausgewählt aus der Gruppe bestehend aus Pentandiamin, Methylpentandiamin, Methyloctandiamin, 1,9-Nonandiamin, 1,10-Decandiamin, 1,12-Dodecandiamin, Trimethylhexamethylendiamin, Bis-(4-amino-3-methyl-cyclohexyl)-methan, Bis-(4-amino-cyclohexyl)-methan und Isophorondiamin.

Ganz besonders bevorzugt wird als Monomer (a3) Bis-(4-amino-3-methyl-cyclohexyl)-methan, Bis-(4-amino-cyclohexyl)-methan und/oder Isophorondiamin eingesetzt.

Das mindestens eine Monomer (a5) ist vorzugsweise ausgewählt aus der Gruppe bestehend aus Isophthalsäure, Terephthalsäure, Naphthalindicarbonsäure, 1,9-Nonandisäure, 1,10-Decandisäure, 1,11-Undecandisäure, 1,12-Dodecandisäure, 1,13-Tridecandisäure, 1,14-Tetradecandisäure, 1,15-Pentadecansäure, 1,16-Hexadecandisäure, 1,17-Heptadecandisäure, 1,18-Octadecandisäure, Arachinsäure, Japansäure, Behensäure, Cycloheaxandisäure, Phenylindandicarbonsäure, Phenylendioxydiessigsäure und Dimerfettsäure mit 36 oder 44 Kohlenstoffatomen.

Eine weitere bevorzugte Gruppe aus der das mindestens eine Monomer (a5) ausgewählt ist, besteht aus Isophthalsäure, Terephthalsäure, 1,10-Decandisäure, 1,12-Dodecandisäure, 1,14-Tetradecandisäure, 1,16-Hexadecandisäure.

Besonders bevorzugt, ist das mindestens eine Monomer (a5) ausgewählt aus der Gruppe bestehend aus Isophthalsäure, Terephthalsäure, 1,10-Decandisäure und 1,12-Dodecandisäure.

Ganz Besonders bevorzugt, wird als Monomer (a5) Isophthalsäure und/oder Terephthalsäure eingesetzt.

Bevorzugt enthält das teilkristalline Copolyamid (Komponenten (A)) weder Lactame noch Aminosäuren.

### Komponente (B)

Der Begriff Füllstoffe (Komponente(B)) umfasst faser- oder nadelförmige Füllstoffe, teilchenförmige Füllstoffe und Mischungen davon.

Die Füllstoffe können vorzugsweise beschichtet oder oberflächenbehandelt sein, d.h. sie können mit einem geeigneten Schlichte- oder Haftvermittlersystem ausgerüstet oder anderweitig oberflächenaktiviert sein. Dazu können zum Beispiel Systeme auf Basis von Urethanen, Silanen, Epoxiden, Polyamiden, Polyhydroxyether, Acrylaten respektive Kombinationen oder Mischungen davon verwendet werden. Die Schlichte- oder Haftvermittlersysteme können auch noch andere Hilfsmittel wie zum Beispiel Antistatika oder Gleitmittel enthalten.

Die faser- oder nadelförmigen Füllstoffe sind vorzugsweise ausgewählt aus der Gruppe bestehend aus Glasfasern, Kohlenstofffasern, Basaltfasern, Schlackenfasern, Metallfasern, Whiskers, Mineralfasern, Wollastonit, gemahlenen Glasfasern, gemahlenen Kohlenstofffasern, gemahlenen Mineralfasern und Mischungen hiervon. Besonders bevorzugt werden die faser- oder nadelförmigen Füllstoffe aus der Gruppe bestehend aus Glasfasern, Kohlenstofffasern, Basaltfasern und Mischungen hiervon ausgewählt. Ganz besonders bevorzugt werden als faser- oder nadelförmige Füllstoffe ausschließlich Glasfasern eingesetzt.

Bei den Glas- oder Kohlenstoffasern können Schnittfasern oder Endlosfasern (Roving) verwendet werden.

Die Glas- oder Kohlenstofffasern weisen einen Querschnitt auf, der rund, oval, elliptisch, eckig oder rechteckig ist. Es können auch Fasern mit nichtkreisförmigen Querschnitt ("flache Fasern"), insbesondere ovale, elliptische, eckige oder rechteckige eingesetzt werden.

Das Erscheinungsbild der Glasfasern kann gestreckt oder spiralförmig sein.

Es können Glasfasern aus allen Glassorten, wie z.B. A-, C-, D-, E-, E-CR-, L-, LD-, M-, NE-, S-, R-, AR-Glas, oder beliebigen Mischungen davon eingesetzt werden. Bevorzugt sind Glasfasern aus E-Glas oder Glasfasern aus Mischungen mit E-Glas oder Mischungen mit E-Glasfasern.

Die Schnittglasfasern besitzen vorzugsweise eine Faserlänge von 1 bis 25 mm, bevorzugt 1.5 bis 20 mm, besonders bevorzugt 2 bis 12 mm und ganz besonders bevorzugt von 2 bis 8 mm.

Die Glasfasern weisen vorzugsweise einen Durchmesser von 5 bis 20 µm, bevorzugt von 5 bis 15 µm und besonders bevorzugt von 6 bis 12 µm auf.

Werden die Glasfasern als Endlosfasern (Roving) beim Pulltrusionsverfahren eingesetzt, weisen sie vorzugsweise einen Durchmesser von maximal 20 µm, bevorzugt von maximal 18 µm, besonders bevorzugt von 10 bis 17 µm auf.

Die Kohlenstofffasern weisen vorzugsweise einen Durchmesser von 3 bis 12 µm, bevorzugt 4 bis 10 µm, besonders bevorzugt 4 bis 9 µm auf.

Bei flachen Fasern beträgt das Aspektverhältnis, d.h. das Verhältnis der Hauptquerschnittsachse zur Nebenquerschnittsachse 1,5 bis 8, bevorzugt 2 bis 6, besonders bevorzugt 3 bis 5.

Unter den flachen Fasern sind flache Glasfasern besonders bevorzugt.

Die Querschnittsachsen der flachen Glasfasern sind 3 bis 40 µm lang. Bevorzugt beträgt die Länge der Nebenquerschnittsachse 3 bis 20 µm, besonders bevorzugt 4 bis 10 µm und die Länge der Hauptquerschnittsachse 6 bis 40 µm, besonders bevorzugt 12 bis 30 µm.

Die teilchenförmigen Füllstoffe sind vorzugsweise ausgewählt aus der Gruppe bestehend aus Dolomit, Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, permanentmagnetischen oder magnetisierbaren Metallen oder Legierungen, Glasflakes, Glaskugeln, Hohlglaskugeln, hohlkugeligen Silikatfüllstoffen und Mischungen hiervon. Besonders bevorzugt werden die teilchenförmigen Füllstoffe aus der Gruppe bestehend aus Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, Glasflakes, Glaskugeln, Hohlglaskugeln, hohlkugeligen Silikatfüllstoffen und Mischungen hiervon ausgewählt. Ganz besonders bevorzugt werden die teilchenförmigen Füllstoffe aus der Gruppe bestehend aus Silikaten, Talkum, Glimmer, Kaolin, Titandioxid, gemahlenem oder gefälltem Calciumcarbonat, Kreide, Kalksteinmehl, Schiefermehl, synthetischen Schichtsilikaten, natürlichen Schichtsilikaten, Glasflakes, Glaskugeln, Hohlglaskugeln und Mischungen hiervon ausgewählt.

Bevorzugt wird in der erfindungsgemäßen Polyamid-Formmasse als Füllstoff (Komponente (B)) mindestens ein faser- oder nadelförmigen Füllstoff oder eine Mischung mindestens eines faser- oder nadelförmigen Füllstoffs mit mindestens einem teilchenförmigen Füllstoff eingesetzt.

Wird eine Mischung aus mindestens einem faser- oder nadelförmigen Füllstoff mit mindestens einem teilchenförmigen Füllstoff verwendet, macht der Anteil des teilchenförmigen Füllstoffs maximal die Hälfte, bevorzugt maximal ein Drittel, besonders bevorzugt maximal ein Viertel der gesamten Menge des Füllstoffs aus.

Besonders bevorzugt werden in der erfindungsgemäßen Polyamid-Formmasse als Füllstoff ausschließlich faser- oder nadelförmige Füllstoffe eingesetzt.

### Komponente (C)

Gemäß einer bevorzugten Ausführungsform der vorliegenden Erfindung ist der mindestens eine Zusatzstoff (Komponente (C)) ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Polyamid-Oligomere, Kohlenstoffnanoröhrchen, photochromen Agenzien, Antistatika, Entformungsmitteln, Antiblockmitteln, kettenverlängernden Additiven, kettenverkürzenden Additiven, optischen Aufhellern, IR-Absorbern, NIR-Absorbern, halogenfreien Flammschutzmitteln, metallischen Pigmenten, Metallflittern, metallbeschichteten Partikeln und Mischungen davon.

Die Polyamid-Oligomere besitzen bevorzugt eine zahlenmittlere Molmasse von 1000 bis 6000 g/mol, besonders bevorzugt von 2500 bis 4500 g/mol, bestimmt mittels Gel-Permeations-Chromatographie (GPC) mit Dreifachdetektor.

Der mindestens eine Zusatzstoff kann auch in Masterbatchform zugegeben werden. Bevorzugt wird als Basispolymer des Masterbatches ein Polyamid verwendet. Dieses Polyamid ist vorzugsweise ausgewählt aus der Gruppe bestehend aus den PA 6, PA 66, PA 12, PA 1012, PA 1212, PA 6/12, PA 6/66, PA 6/69 und deren Mischungen oder besteht aus dem Copolyamid (A) selbst.

### Formkörper

Erfindungsgemäß werden ebenso Formkörper bereitgestellt, die aus den zuvor beschriebenen Formmassen herstellbar sind. Die erfindungsgemäßen Formkörper können aus der erfindungsgemäßen Polyamid-Formmasse über die gängigen Verarbeitungstechniken, wie z.B. Spritzgussverfahren hergestellt werden.

Eine bevorzugte Ausführungsform sieht vor, dass der Formkörper ausgewählt ist aus der Gruppe bestehend aus unlackierten Sichtteilen mit oder ohne Funktion, im Fahrzeuginnenraum oder Kofferraum, Haushalt, Maschinenbau, an Elektrogeräten, Elektronikgeräten, Haushaltsgeräten, Möbeln, insbesondere Lüfterlamellen, Schalthebel, Schaltwippen, Tasten, Drehreglern, Haltegriffen, Bedienelementen der Sitzverstellung, Bedienelementen an der Lenksäule, Bedienhebeln, Bedienelementen, Schubladen, Halterungen für Zusatzgeräte, Getränkehaltern, Gepäckhaken, Abdeckungen, Lichtschaltern, Rasierkopf, Scherenteile, Gewindestangen, insbesondere für Insulinpumpen, Gehäusen und Dekorelementen.

### Verwendungen

Weiterhin betrifft die vorliegende Erfindung die Verwendung der oben definierten erfindungsgemäßen Polyamid-Formmasse zur Herstellung zur Herstellung von unlackierten Sichtteilen mit oder ohne Funktion, im Fahrzeuginnenraum oder Kofferraum, Haushalt, Maschinenbau, an Elektrogeräten, Elektronikgeräten, Haushaltsgeräten, Möbeln, insbesondere Lüfterlamellen, Schalthebel, Schaltwippen, Tasten, Drehreglern, Haltegriffen, Bedienelementen der Sitzverstellung, Bedienelementen an der Lenksäule, Bedienhebeln, Bedienelementen, Schubladen, Halterungen für Zusatzgeräte, Getränkehaltern, Gepäckhaken, Abdeckungen, Lichtschaltern, Rasierkopf, Scherenteile, Gewindestangen, insbesondere für Insulinpumpen, Gehäusen und Dekorelementen.

Anhand der nachfolgenden Beispiele soll der erfindungsgemäße Gegenstand näher erläutert werden.

### Beispiele und Vergleichsbeispiele

### Messmethoden

### Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Glasübergangstemperatur (Tg), Kristallisationswärme, Schmelzwärme und Schmelzpunkt

Die Bestimmung erfolgte nach ISO 11357-3 (2013) an Granulat.

Die Differential Scanning Calorimetry (DSC) wurde bei jeder der drei Aufheizungen mit einer Aufheizrate von 20 K/min durchgeführt. Nach der ersten Aufheizung wird mit 20 K/min abgekühlt. Nach der zweiten Aufheizung wird die Probe in Trockeneis abgeschreckt. Die Glasübergangstemperatur (Tg) wird bei der dritten Aufheizung bestimmt, der Schmelzpunkt bei der zweiten. Die Kristallisationstemperatur und die Kristallisationsgeschwindigkeit werden beim Abkühlen nach der ersten Aufheizung bestimmt.

Beim Schmelzpunkt wird die Temperatur am Peakmaximum angegeben. Der Mittelpunkt des Glasübergangsbereichs, welcher als Glasübergangstemperatur (Tg) angegeben wird, wurde nach der Methode "Half height" ermittelt.

### Glanzwert bei 60°

Der Glanzwert bei einem Messwinkel von 60° wurde nach DIN EN ISO 2813 (2015) auf einem Gloss Tector (ATP Messtechnik GmbH, Deutschland) bei 23 °C an Platten mit den Dimensionen 60 x 60 x 2 mm bestimmt. Die Angabe erfolgt in Glanzeinheiten (GU).

### Zug E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Molmassenbestimmung

Die Bestimmung der Molmasse erfolgt mittels Gel-Permeations-Chromatographie (GPC) mit Dreifachdetektor: Brechungsindex, Viskosität und Lichtstreuung (7° und 90°).

Zur Messung werden die Proben in Hexafluorisopropanol (HFIP)gelöst (ca. 5 mg Polymer in 1 ml) und vor dem Abfüllen in Vials durch Einweg-Spritzenfilter filtriert.

| | |
|---|---|
| Gerät: | Malvern OMNISEC GPC-System |
| Software: | Malvern OMNISEC Version 10.41 |
| Säule: | Malvern HFIP3000 + HFIP6000M |
| | 300 x 7.8 mm, 10 µm Partikelgröße |
| Eluent: | HFIP mit 0.1 M Kaliumtrifluoracetat |
| Säulentemperatur: | 40 °C |
| Detektortemperatur: | 40 °C |
| Flussrate: | 1,0 ml/min |

Die Molekularmassen (Zahlenmittel Mn und Gewichtsmittel Mw) werden mit der Dreifach-Detektions-Methode ermittelt. Die Kalibrierung des GPC-Systems erfolgt mit einem monodispersen PMMA-Standard. Es werden jeweils drei Bestimmungen durchgeführt. Angegeben wird das arithmetische Mittel der Molekularmasse.

Das Lösungsmittel HFIP wurde in HPLC-Qualität bei Fluorochem, Deutschland bezogen, das Kaliumtrifluoracetat bei Sigma-Aldrich, Schweiz.

Die Einwegfilter sind erhältlich bei Chemie Brunschwig, Schweiz unter der Bezeichnung SFPTFE0250022NBC (PTFE-Membran, Porengröße 0,45 µm, Filterdurchmesser 25 mm).

Die Einwegspritzen sind erhältlich bei VWR International GmbH, Deutschland.

### Herstellung der Prüfkörper

Zur Herstellung der Prüfkörper wurde Granulat mit einem Wassergehalt von weniger als 0,1 Gew.-% verwendet.

Die Prüfkörper wurden auf einer Spritzgussmaschine der Firma Arburg, Modell Allrounder 420 C 1000-250 hergestellt. Dabei wurden vom Einzug zur Düse auf- und absteigende Zylindertemperaturen verwendet.

### ISO-Zugstäbe

| | |
|---|---|
| Zylindertemperaturen: | 260/265/270/275/280/275 °C |
| Werkzeugtemperatur: | 110 °C |

### Platten 60 x 60 x 2 mm

| | |
|---|---|
| Zylindertemperaturen: | 270/275/280/285/290/285 °C |
| Werkzeugtemperatur: | 110 °C |

Für die Herstellung der Platten wurde ein poliertes Werkzeug verwendet.

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, gelagert.

Die Platten 60 x 60 x 2 mm für die Oberflächenglanzmessung im konditionierten Zustand wurden nach ISO 1110 für 7 Tage bei 70 °C und 62 % relativer Feuchte gelagert.

### Ausgangsmaterialien

Die in den Beispielen und Vergleichsbeispielen verwendeten Materialien werden in den Tabellen 1 bis 3 zusammengefasst.

**Tabelle 1 In den Beispielen eingesetzte Polyamide (A) (fortgesetzt auf den nächsten Seiten)**

| **Komponente** | **Beschreibung** | **Hersteller** |
|---|---|---|
| Polyamid (A1) | Teilkristallines Copolyamid 66/1,3-BAC6 aus 1,6-Hexandiamin (25,0 Mol-%), 1,3-Bis(aminomethyl)-cyclohexan (25,0 Mol-%) und 1,6-Hexandisäure (50,0 Mol-%) | EMS-CHEMIE AG, Schweiz |
| | RV 1,80 (gemessen mit 0,5 g in 100 ml m-Kresol bei 20 °C) | |
| | Glasübergangstemperatur 80 °C | |
| | Schmelzpunkt 202 °C | |
| Polyamid (A2) | Teilkristallines Copolyamid 66/1,3-BAC6 aus 1,6-Hexandiamin (27,5 Mol-%), 1,3-Bis(aminomethyl)-cyclohexan (22,5 Mol-%) und 1,6-Hexandisäure (50,0 Mol-%) | EMS-CHEMIE AG, Schweiz |
| | RV 1,75 (gemessen mit 0,5 g in 100 ml m-Kresol bei 20 °C) | |
| | Glasübergangstemperatur 76 °C | |
| | Schmelzpunkt 207 °C | |
| Polyamid (A3) | Teilkristallines Copolyamid 66/1,3-BAC6 aus 1,6-Hexandiamin (30,0 Mol-%), 1,3-Bis(aminomethyl)-cyclohexan (20,0 Mol-%) und 1,6-Hexandisäure (50,0 Mol-%) | EMS-CHEMIE AG, Schweiz |
| | RV 1,74 (gemessen mit 0,5 g in 100 ml m-Kresol bei 20 °C) | |
| | Glasübergangstemperatur 73 °C | |
| | Schmelzpunkt 215 °C | |
| Polyamid (A4) | Teilkristallines Copolyamid 66/1,3-BAC6 aus 1,6-Hexandiamin (32,5 Mol-%), 1,3-Bis(aminomethyl)-cyclohexan (17,5 Mol-%) und 1,6-Hexandisäure (50,0Mol-%) | EMS-CHEMIE AG, Schweiz |
| | RV 1,79 (gemessen mit 0,5 g in 100 ml m-Kresol bei 20 °C) | |
| | Glasübergangstemperatur 70 °C | |
| | Schmelzpunkt 222 °C | |
| Polyamid (A5) | Teilkristallines Copolyamid 66/1,3-BAC6 aus 1,6-Hexandiamin (35,0 Mol-%), 1,3-Bis(aminomethyl)-cyclohexan (15,0 Mol-%) und 1,6-Hexandisäure (50,0Mol-%) | EMS-CHEMIE AG, Schweiz |
| | RV 1,81 (gemessen mit 0,5 g in 100 ml m-Kresol bei 20 °C) | |
| | Glasübergangstemperatur 68 °C | |
| | Schmelzpunkt 230 °C | |
| Polyamid (A6) | Teilkristallines Copolyamid 66/1,3-BAC6 aus 1,6-Hexandiamin (37,5 Mol-%), 1,3-Bis(aminomethyl)-cyclohexan (12,5 Mol-%) und 1,6-Hexandisäure (50,0Mol-%) | EMS-CHEMIE AG, Schweiz |
| | RV 1,85 (gemessen mit 0,5 g in 100 ml m-Kresol bei 20 °C) | |
| | Glasübergangstemperatur 67 °C | |
| | Schmelzpunkt 236 °C | |
| Polyamid (A8) | Teilkristallines Copolyamid 66/1,3-BAC6/MACM6 aus 1,6-Hexandiamin (32,5 Mol-%), 1,3-Bis(aminomethyl)-cyclohexan (15,0 Mol-%), Bis-(4-amino-3-methyl-cyclohexyl)-methan (2,5 Mol-%) und 1,6-Hexandisäure (50,0 Mol-%) | EMS-CHEMIE AG, Schweiz |
| | RV 1,79 (gemessen mit 0,5 g in 100 ml m-Kresol bei 20 °C) | |
| | Glasübergangstemperatur 72 °C | |
| | Schmelzpunkt 224 °C | |
| Polyamid (A10) | Teilkristallines Copolyamid 66/1,3-BAC6/PACM6 aus 1,6-Hexandiamin (32,5 Mol-%), 1,3-Bis(aminomethyl)-cyclohexan (15,0 Mol-%), Bis-(4-amino-cyclohexyl)-methan (2,5 Mol-%) und 1,6-Hexandisäure (50,0 Mol-%) | EMS-CHEMIE AG, Schweiz |
| | RV 1,83 (gemessen mit 0,5 g in 100 ml m-Kresol bei 20 °C) | |
| | Glasübergangstemperatur 72 °C | |
| | Schmelzpunkt 224 °C | |
| Polyamid (A12) | Teilkristallines Copolyamid 66/6I/1,3-BAC6/1,3-BACI aus 1,6-Hexandiamin (35 Mol-%), 1,3-Bis(aminomethyl)-cyclohexan (15 Mol-%), Isophthalsäure (5,0 Mol-%), 1,6-Hexandisäure (45,0 Mol-%) | EMS-CHEMIE AG, Schweiz |
| | RV 1,80 (gemessen mit 0,5 g in 100 ml m-Kresol bei 20 °C) | |
| | Glasübergangstemperatur 78 °C | |
| | Schmelzpunkt 223 °C | |
| Polyamid (A13) | Teilkristallines Copolyamid 66/6T/1,3-BAC6/1,3-BACT aus 1,6-Hexandiamin (35 Mol-%), 1,3-Bis(aminomethyl)-cyclohexan (15 Mol-%), Terephthalsäure (5,0 Mol-%) und 1,6-Hexandisäure (45,0 Mol-%) | EMS-CHEMIE AG, Schweiz |
| | RV 1.83 (gemessen mit 0,5 g in 100 ml m-Kresol bei 20 °C) | |
| | Glasübergangstemperatur 78 °C | |
| | Schmelzpunkt 225 °C | |

**Tabelle 2 In den Vergleichsbeispielen eingesetzte Polyamide (V)**

| **Komponente** | **Beschreibung** | **Hersteller** |
|---|---|---|
| Polyamid (V1) | Teilkristallines Copolyamid 66/1,3-BAC6 aus 1,6-Hexandiamin (45,0 Mol-%), 1,3-Bis(aminomethyl)-cyclohexan (5,0 Mol-%) und 1,6-Hexandisäure (50,0 Mol-%) | EMS-CHEMIE AG, Schweiz |
| | RV 1.84 (gemessen mit 0,5 g in 100 ml m-Kresol bei 20 °C) | |
| | Glasübergangstemperatur 59 °C | |
| | Schmelzpunkt 250 °C | |
| Polyamid (V2) | Teilkristallines Copolyamid 66/1,3-BAC6 aus 1,6-Hexandiamin (40,0 Mol-%), 1,3-Bis(aminomethyl)-cyclohexan (10,0 Mol-%) und 1,6-Hexandisäure (50,0 Mol-%) | EMS-CHEMIE AG, Schweiz |
| | RV 1,90 (gemessen mit 0,5 g in 100 ml m-Kresol bei 20 °C) | |
| | Glasübergangstemperatur 61 °C | |
| | Schmelzpunkt 240 °C | |
| Polyamid (V3) | Teilkristallines Polyamid 1,3-BAC6 aus 1,3-Bis(aminomethyl)-cyclohexan und 1,6-Hexandisäure | EMS-CHEMIE AG, Schweiz |
| | RV 1,60 (gemessen mit 0,5 g in 100 ml m-Kresol bei 20 °C) | |
| | Glasübergangstemperatur 110 °C | |
| | Schmelzpunkt 229 °C | |
| Polyamid (V4) | Teilkristallines Polyamid 66 aus 1,6-Hexandiamin und 1,6-Hexandisäure | RadiciChimica SpA, Italien |
| | RV 1,79 (gemessen mit 0,5 g in 100 ml m-Kresol bei 20 °C) | |
| | Glasübergangstemperatur 55 °C | |
| | Schmelzpunkt 261 °C | |
| | Handelsname: Radipol A45 | |

**Tabelle 3 In den Beispielen und Vergleichsbeispielen verwendete Glasfasern (B) und Zusatzstoffe (C)**

| **Komponente** | **Beschreibung** | **Handelsname** | **Hersteller** |
|---|---|---|---|
| Glasfaser (B1) | Runde Glasfaser, 4.5 mm lang, Durchmesser 10 µm | OCV | Owens Corning Vetrotex, Frankreich |
| | | 995 EC10-4.5 | |
| Glasfaser (B2) | Flache Glasfaser, 3 mm lang, Hauptquerschnittsachse 28 µm, Nebenquerschnittachse 7 µm | Nittobo | Nitto Boseki Co., Ltd., Japan |
| | | CSG3PA-820 | |
| Kaolin (B3) | CAS-Nr. 1332-58-7 | Translink 445 | BASF SE, Deutschland |
| Mica (B4) | CAS-Nr. 12001-26-2 | Mica HLM 100 | |
| Antioxidans (C1) | Ethylenbis(oxyethylen)bis[3-(5-tert-butyl-4-hydroxy-m-tolyl)propionat] | Irganox 245 | BASF SE, Deutschland |
| | CAS-Nr.: 36443-68-2 | | |
| Schwarz-Masterbatch (C2) | 25 Gew.-% Ruß in Radipol A45 (PA66) der RadiciChimica SpA, Italien | - | EMS-CHEMIE AG, Schweiz |
| Zusatzstoff-mischung (CM) | Gewichtsverhältnis | - | - |
| | (C1):(C2) = 1 : 5 | | |

### Allgemeine Herstellungsvorschrift für die Copolyamide (A)

Die Herstellung der erfindungsgemäßen Copolyamide erfolgt auf an sich bekannte Weise in bekannten, rührbaren Druckautoklaven mit einem Vorlagegefäß und einem Reaktionsgefäß:
Im Vorlagegefäß wird deionisiertes Wasser vorgelegt und die Monomere und etwaige Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 250 bis 300 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2 Stunden auf atmosphärischen Druck reduziert, wobei die Temperatur leicht sinken kann. In der folgenden Entgasungsphase wird der Ansatz bei atmosphärischem Druck für 0,5 bis 6 Stunden auf einer Temperatur von 250 bis 300 °C gehalten. Die Polymerschmelze wird in Strangform ausgetragen, im Wasserbad bei 10 bis 80 °C abgekühlt und granuliert. Das Granulat wird bei 60 bis 120 °C unter Stickstoff oder im Vakuum auf einen Wassergehalt von weniger als 0,1 Gew.-% getrocknet.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate. Die Katalysatoren werden bevorzugt im Bereich von 0,01 bis 0,5 Gew.-%, besonders bevorzugt von 0,03 bis 0,1 Gew.-%, bezogen auf das Polyamid, zugegeben.

Geeignete Entschäumer zur Vermeidung der Schaumbildung während der Entgasung sind wässrige, 10 %-ige Emulsionen, die Silicone oder Siliconderivate enthalten und bevorzugt in Mengen von 0,01 bis 1,0 Gew.-%, besonders bevorzugt von 0,01 bis 0,10 Gew.-%, bezogen auf das Polyamid, eingesetzt werden.

Die Einstellung der relativen Viskosität und damit der Molmasse kann in an sich bekannter Weise, z.B. über monofunktionelle Amine oder Carbonsäuren, und/oder difunktionelle Diamine oder Dicarbonsäuren als Kettenregler erfolgen. Die bevorzugte Einsatzmenge der monofunktionellen Kettenregler liegt bei 10 bis 200 mmol pro kg Copolyamid.

### Allgemeine Herstellungsvorschrift für die erfindungsgemäßen Polyamid-Formmassen

Zur Herstellung der erfindungsgemäßen Polyamid-Formmasse werden die Komponenten (A), (B) und gegebenenfalls (C) auf üblichen Compoundiermaschinen, wie z.B. ein- oder zweiwelligen Extrudern oder Schneckenknetern gemischt. Die Komponenten werden dabei einzelnen über gravimetrische oder volumetrische Dosierwaagen in den Einzug oder jeweils in einen Sidefeeder dosiert oder in Form eines Dryblends zugeführt.

Werden Zusatzstoffe (Komponente (C)) verwendet, können diese direkt oder in Form eines Masterbatches eingebracht werden. Bei dem Trägermaterial des Masterbatches handelt es sich bevorzugt um ein Polyamid oder ein Polyolefin. Unter den Polyamiden eignet sich dazu besonders das Copolyamid (A).

Zur Dryblend-Herstellung wird das getrockneten Granulat des Copolyamids (A) und gegebenenfalls die Zusatzstoffe (C) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 250 bis 310 °C, wobei die Temperatur des ersten Zylinders unter 90 °C eingestellt werden kann. Vor der Düse kann entgast werden. Dies kann mittels Vakuum oder atmosphärisch erfolgen. Die Schmelze wird in Strangform ausgetragen, im Wasserbad bei 10 bis 80 °C abgekühlt und anschließend granuliert. Alternativ kann die Schmelze auch durch eine Lochplatte mit Schneideinrichtung in ein Wasserbad gepresst und die abgeschnittenen Granulate in einer Nachbehandlungsstrecke abgetrennt werden (Unterwassergranulation). Das Granulat wird bei 60 bis 120 °C unter Stickstoff oder im Vakuum auf einen Wassergehalt von unter 0,1 Gew.-% getrocknet.

### Herstellung der Polyamid-Formmasse gemäß Beispiel 3

Das getrocknete Granulat des Copolyamids PA 66/1,3-BAC6 (A3) und die Zusatzstoffmischung (CM1) wurden zu einem Dryblend vermischt, und zwar in dem in der Tabelle 4, Beispiel 3 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Werner & Pfleiderer Typ ZSK 25 hergestellt. Das Dryblend wurde dabei über eine Dosierwaage in den Einzug dosiert. Die Glasfasern (B1) wurden mittels einer Dosierwaage und eines Sidefeeders 6 Gehäusezonen vor der Düse in die Schmelze gefördert.

Die Temperatur des ersten Gehäuses wurde auf 50 °C eingestellt, diejenige der restlichen Gehäuse auf 260 bis 280 °C. Es wurde eine Drehzahl von 250 U/min und ein Durchsatz von 15 kg/h verwendet. Es wurde nicht entgast. Der Schmelzestrang wurde im Wasserbad abgekühlt, geschnitten und das erhaltene Granulat bei 100 °C für 24 h im Vakuum (30 mbar) auf einen Wassergehalt von unter 0,1 Gew.-% getrocknet.

### Versuchsergebnisse

Die erfindungsgemäßen Formmassen wurden hinsichtlich des Glanzes der Oberfläche und Zug-E-Moduls untersucht. Die Ergebnisse dieser Untersuchungen sind in Tabellen 4 und 5 dargestellt.

Ebenso wurden nicht-erfindungsgemäße Formmassen hinsichtlich des Oberflächenglanzes und des Zug-E-Moduls unter den gleichen Messbedingungen untersucht. Die Resultate der Vergleichsbeispiele sind in Tabelle 6 zusammengefasst.

**Tabelle 4 Erfindungsgemäße Beispiele 1 bis 10**

| **Komponente** | **Einheit** | **Beispiele** | | | | | | | | | |
|---|---|---|---|---|---|---|---|---|---|---|---|
| | | **1** | **2** | **3** | **4** | **5** | **6** | **7** | **8** | **9** | **10** |
| Polyamid (A) PA 66/1,3-BAC6 | Mol-% | (A1) 50/50 | (A2) 55/45 | (A3) 60/40 | (A4) 65/35 | (A5) 70/30 | (A6) 75/25 | (A3) 60/40 | (A3) 60/40 | (A3) 60/40 | (A3) 60/40 |
| Polyamid (A) | Gew.-% | 47.6 | 47.6 | 47.6 | 47.6 | 47.6 | 47.6 | 47.6 | 49.6 | 57.6 | 47.6 |
| Glasfasern (B1), rund | Gew.-% | 50.0 | 50.0 | 50.0 | 50.0 | 50.0 | 50.0 | - | 50.0 | - | 25.0 |
| Glasfasern (B2), flach | Gew.-% | - | - | - | - | - | - | 50.0 | - | - | - |
| Kaolin (B3) | Gew.-% | - | - | - | - | - | - | - | - | 40.0 | - |
| Mica (B4) | Gew.-% | - | - | - | - | - | - | - | - | - | 25.0 |
| Zusatzstoffmischung (CM) | Gew.-% | 2.4 | 2.4 | 2.4 | 2.4 | 2.4 | 2.4 | 2.4 | - | 2.4 | 2.4 |
| Antioxidans (C1) | Gew.-% | - | - | - | - | - | - | - | 0.4 | - | - |

| **Messwerte** | | | | | | | | | | | |
|---|---|---|---|---|---|---|---|---|---|---|---|
| Glasübergangstemperatur^{∗} | °C | 78 | 74 | 72 | 69 | 68 | 67 | 73 | 73 | 73 | 72 |
| Schmelzpunkt** | °C | 207 | 214 | 220 | 227 | 230 | 235 | 219 | 218 | 222 | 221 |
| Kristallisationstemperatur*** | °C | 154 | 161 | 175 | 180 | 188 | 197 | 175 | 175 | 185 | 183 |
| Kristallisationsgeschwindigkeit*** | J/g min | 16 | 22 | 35 | 39 | 45 | 41 | 33 | 27 | 21 | 30 |
| Glanzwert, 60°, trocken | GU | 80 | 83 | 88 | 86 | 78 | 81 | 90 | 90 | 93 | 91 |
| Glanzwert, 60°, konditioniert | GU | 74 | 76 | 78 | 75 | 78 | 79 | 84 | 80 | 91 | 90 |
| Zug-E-Modul | MPa | 16000 | 16300 | 16500 | 16600 | 16800 | 16900 | 16800 | 16600 | 6400 | 16700 |

| | | | | | | | | | | | |
|---|---|---|---|---|---|---|---|---|---|---|---|
| ^{∗} Werte der 3. Aufheizung ^{∗∗} Werte der 2. Aufheizung ^{∗∗∗} Werte beim Abkühlen nach der 1. Aufheizung | | | | | | | | | | | |

**Tabelle 5 Erfindungsgemäße Beispiele 11 bis 14**

| **Komponente** | **Einheit** | **Beispiele** | | | | | | |
|---|---|---|---|---|---|---|---|---|
| | | | **11** | | **12** | | **13** | **14** |
| Polyamid (A) PA 66/1,3-BAC6/MACM6 | Mol-% | | (A8) 65/30/5 | | | | | |
| Polyamid (A) PA 66/1,3-BAC6/PACM6 | Mol-% | | | | (A10) 65/30/5 | | | |
| Polyamid (A11) PA 66/1,3-BAC6/IPD6 | Mol-% | | | | | | | |
| Polyamid (A12) PA 66/6!//1,3-BAC6/1,3-BACI 63/7/27/3 | Mol-% | | | | | | (A12) | |
| Polyamid (A13) PA 66/6T/1,3-BAC6/1,3-BACT 63/7/27/3 | Mol-% | | | | | | | (A13) |
| Polyamid (A) | Gew.-% | | 47.6 | | 47.6 | | 47.6 | 47.6 |
| Glasfasern (B) | Gew.-% | | 50.0 | | 50.0 | | 50.0 | 50.0 |
| Zusatzstoffmischung (CM) | Gew.-% | | 2.4 | | 2.4 | | 2.4 | 2.4 |

| **Messwerte** | | | | | | | | |
|---|---|---|---|---|---|---|---|---|
| Glasübergangstemperatur^{∗} | °C | | 72 | | 72 | | 78 | 78 |
| Schmelzpunkt^{∗∗} | °C | | 224 | | 224 | | 223 | 225 |
| Kristallisationstemperatur^{∗∗∗} | °C | | 179 | | 181 | | 158 | 163 |
| Kristallisationsgeschwindigkeit^{∗∗∗} | J/g min | | 33 | | 37 | | 16 | 21 |
| Glanzwert, 60°, trocken | GU | | 80 | | 80 | | 77 | 74 |
| Glanzwert, 60°, konditioniert | GU | | 80 | | 80 | | 74 | 72 |
| Zug-E-Modul | MPa | | 16500 | | 16600 | | 16600 | 17000 |

| | | | | | | | | |
|---|---|---|---|---|---|---|---|---|
| * Werte der 3. Aufheizung ** Werte der 2. Aufheizung *** Werte beim Abkühlen nach der 1. Aufheizung | | | | | | | | |

**Tabelle 6 Vergleichsbeispiele 18 bis 22**

| **Komponente** | **Einheit** | **Vergleichsbeispiele** | | | | |
|---|---|---|---|---|---|---|
| | | **18** | **19** | **20** | **21** | **22** |
| Polyamid (V) PA 66/1 ,3-BAC6 | Mol-% | (V1) 90/10 | (V2) 80/20 | (V3) 0/100 | (V4) 100/0 | - |
| Polyamid (A3) PA 66/1,3-BAC6 | Mol-% | - | - | - | - | (A3) 60/40 |
| Polyamid (V) bzw. (A3) | Gew.-% | 47.6 | 47.6 | 47.6 | 47.6 | 97.6 |
| Glasfasern (B) | Gew.-% | 50.0 | 50.0 | 50.0 | 50.0 | - |
| Zusatzstoffmischung (CM) | Gew.-% | 2.4 | 2.4 | 2.4 | 2.4 | 2.4 |

| **Messwerte** | | | | | | |
|---|---|---|---|---|---|---|
| Glasübergangstemperatur* | °C | 59 | 61 | 110 | 55 | 73 |
| Schmelzpunkt** | °C | 250 | 240 | 229 | 261 | 215 |
| Kristallisationstemperatur*** | °C | 216 | 205 | k | 229 | 164 |
| Kristallisationsgeschwindigkeit*** | J/g min | 48 | 37 | k | 32 | 27 |
| Glanzwert, 60°, trocken | GU | 57 | 57 | 65 | 48 | 93 |
| Glanzwert, 60°, konditioniert | GU | 49 | 57 | 2 | 43 | 89 |
| Zug-E-Modul | MPa | 16700 | 17000 | 15600 | 16800 | 2600 |

| | | | | | | |
|---|---|---|---|---|---|---|
| ^{∗} Werte der 3. Aufheizung ^{∗∗} Werte der 2. Aufheizung ^{∗∗∗} Werte beim Abkühlen nach der 1. Aufheizung k keine Kristallisation beim Abkühlen nach der 1. Aufheizung | | | | | | |

### Diskussion der Ergebnisse

Die Platten aus den mit Glasfasern gefüllten erfindungsgemäßen Polyamid-Formmassen der Beispiele 1 bis 8 und 11 bis 14 zeigen durchweg einen besseren Glanzwert als die Platten der Vergleichsmaterialien der Polyamid-Formmasse der Vergleichsbeispiele 18 bis 21, und zwar sowohl trocken als auch konditioniert.

Die besten Glanzwerte besitzen Platten aus den Polyamid-Formmassen der Beispiele 9 und 10, die nur mit Mineral bzw. einer Mischung aus Glasfasern und Mineral gefüllt sind.

Die Platten aus dem mit Glasfasern gefüllten PA 66 des Vergleichsbeispiels 21 zeigen dessen mangelhafte Eignung für Sichtteile, da die Oberflächenqualität unzureichend ist.

Bei dem mit Glasfasern gefüllten PA 1,3-BAC6 des Vergleichsbeispiels 20 ist in der DSC-Messung beim Abkühlen nach der 1. Aufheizung keine Kristallisation mehr feststellbar. Der bei 50 Mol-% liegende Gehalt an 1,3-Bis(aminomethyl)-cyclohexan ist also zu hoch. Dies wirkt sich auch auf den Glanzwert aus der durch die Konditionierung stark absinkt, da es dabei zur Nachkristallisation kommt.

Um einen Zug-E-Modul von mindestens 5000 MPa erreichen zu können, muss die erfindungsgemäße Polyamid-Formmasse Füllstoff enthalten, wie der Polyamid-Formmasse des Vergleichsbeispiels 22 zu entnehmen ist.

## Patentansprüche

1. Polyamid-Formmasse enthaltend die folgenden Komponenten (A) bis (C) oder bestehend aus diesen Komponenten:
(A) 22 bis 70 Gew.-% eines teilkristallinen Copolyamids gebildet aus den Monomeren (a1) bis (a5):
(a1) 20 bis 37,5 Mol-% 1,6-Hexandiamin;
(a2) 12,5 bis 25 Mol-% 1,3-Bis(aminomethyl)-cyclohexan;
(a3) 0 bis 5 Mol-% mindestens ein Diamin mit 2 bis 35 Kohlenstoffatomen, verschieden von den Monomeren (a1) und (a2);
(a4) 45 bis 50 Mol-% 1,6-Hexandisäure; und
(a5) 0 bis 5 Mol-% mindestens eine Dicarbonsäure mit 2 bis 44 Kohlenstoffatomen, verschieden von dem Monomer (a4);
wobei die Anteile der Monomere (a1), (a2) und (a3) auf die Summe der eingesetzten Diamine bezogen sind und sich auf 50 Mol-% ergänzen; und
wobei die Anteile der Monomere (a4) und (a5) auf die Summe der eingesetzten Dicarbonsäuren bezogen sind und sich auf 50 Mol-% ergänzen; und
wobei sich die Monomere (a1) bis (a5) auf 100 Mol-% ergänzen;
(B) 30 bis 70 Gew.-% mindestens eines Füllstoffes; und
(C) 0 bis 8 Gew.-% mindestens eines Zusatzstoffes;
wobei die Komponente (C) verschieden von Komponente (B) ist und wobei sich die Mengenanteile der Komponenten (A) bis (C) auf 100 Gew.-% ergänzen.

2. Polyamid-Formmasse nach Anspruch 1,
**dadurch gekennzeichnet, dass**
der Anteil von Komponente (A) in der Polyamid-Formmasse im Bereich von 29 bis 64,9 Gew.-% und bevorzugt im Bereich von 36 bis 59,8 Gew.-%, bezogen auf das Gesamtgewicht der Polyamid-Formmasse, liegt, und/oder
der Anteil von Komponente (B) in der Polyamid-Formmasse im Bereich von 35 bis 65 Gew.-%, bevorzugt im Bereich von 40 bis 60 Gew.-%, bezogen auf das Gesamtgewicht der Polyamid-Formmasse, liegt, und/oder
der Anteil von Komponente (C) in der Formmasse im Bereich von 0,1 bis 6 Gew.-% und bevorzugt im Bereich von 0,2 bis 4 Gew.-%, bezogen auf das Gesamtgewicht der Polyamid-Formmasse liegt.

3. Polyamid-Formmasse gemäß einem der vorhergehenden Ansprüche, **dadurch gekennzeichnet, dass**
• der Anteil an Monomer (a1) im Copolyamid im Bereich von 20 bis 35 Mol-%, bevorzugt im Bereich von 22 bis 32,5 Mol-%, besonders bevorzugt im Bereich von 25 bis 32,5 Mol-% liegt; und/oder
• der Anteil an Monomer (a2) im Copolyamid im Bereich von 15 bis 25 Mol-%, bevorzugt im Bereich von 17,5 bis 22,5 Mol-% liegt;
• der Anteil an Monomer (a3) im Copolyamid im Bereich von 0 bis 2,5 Mol-% liegt;
wobei sich die Anteile der Monomere (a1), (a2) und (a3) auf die Summe der eingesetzten Diamine beziehen und sich auf 50 Mol-% ergänzen.

4. Polyamid-Formmasse gemäß einem der vorhergehenden Ansprüche, **dadurch gekennzeichnet, dass**
• der Anteil an Monomer (a4) im Copolyamid im Bereich von 47,5 bis 50 Mol-% liegt; und/oder
• der Anteil an Monomer (a5) im Copolyamid im Bereich von 0 bis 2,5 Mol-% liegt;
wobei sich die Anteile der Monomere (a4) und (a5) auf die Summe der eingesetzten Dicarbonsäuren beziehen und sich auf 50 Mol-% ergänzen.

5. Polyamid-Formmasse nach einem der vorhergehenden Ansprüche, **dadurch gekennzeichnet, dass**
das mindestens eine Monomer (a3) ausgewählt ist aus der Gruppe bestehend aus Ethylendiamin, Butandiamin, Pentandiamin, Methylpentandiamin, 1,8-Octandiamin, Methyloctandiamin, 1,9-Nonandiamin, 1,10-Decandiamin, 1,11-Undecandiamin, 1,12-Dodecandiamin, Trimethylhexamethylendiamin, 1,4-Cyclohexandiamin, 1,3-Cyclohexandiamin, Bis-(4-amino-3-methylcyclohexyl)-methan, Bis-(4-amino-cyclohexyl)-methan, Isophorondiamin, 1,4-Bis(aminomethyl)-cyclohexan, m-Xylylendiamin, p-Xylylendiamin, Bis(aminocyclohexyl)propan und seinen Alkylderivaten, Norbornandiamin und Bis(aminomethyl)norbornan und/oder
das mindestens eine Monomer (a5) ausgewählt ist aus der Gruppe bestehend aus Isophthalsäure, Terephthalsäure, Naphthalindicarbonsäure, 1,9-Nonandisäure, 1,10-Decandisäure, 1,11-Undecandisäure, 1,12-Dodecandisäure, 1,13-Tridecandisäure, 1,14-Tetradecandisäure, 1,15-Pentadecansäure, 1,16-Hexadecandisäure, 1,17-Heptadecandisäure, 1,18-Octadecandisäure, Arachinsäure, Japansäure, Behensäure, Cycloheaxandisäure, Phenylindandicarbonsäure, Phenylendioxydiessigsäure und Dimerfettsäure mit 36 oder 44 Kohlenstoffatomen.

6. Polyamid-Formmasse nach einem der vorhergehenden Ansprüche, **dadurch gekennzeichnet, dass** der mindestens eine Füllstoff (B) ausgewählt ist aus der Gruppe bestehend aus faser- oder nadelförmige Füllstoffe, teilchenförmige Füllstoffe und Mischungen davon, die ggf. beschichtet oder oberflächenbehandelt sind.

7. Polyamid-Formmasse nach dem vorhergehenden Anspruch,
**dadurch gekennzeichnet, dass** die faser- oder nadelförmigen Füllstoffe ausgewählt sind aus der Gruppe bestehend aus Glasfasern, Kohlenstofffasern, Basaltfasern, Schlackenfasern, Metallfasern, Whiskers, Mineralfasern, Wollastonit, gemahlenen Glasfasern, gemahlenen Kohlenstofffasern, gemahlenen Mineralfasern und Mischungen hiervon, bevorzugt ausgewählt aus der Gruppe bestehend aus Glasfasern, Kohlenstofffasern, Basaltfasern und Mischungen hiervon.

8. Polyamid-Formmasse nach Anspruch 6,
**dadurch gekennzeichnet, dass** die teilchenförmigen Füllstoffe ausgewählt sind aus der Gruppe bestehend aus Dolomit, Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, permanentmagnetischen oder magnetisierbaren Metallen oder Legierungen, Glasflakes, Glaskugeln, Hohlglaskugeln, hohlkugeligen Silikatfüllstoffen und Mischungen hiervon, bevorzugt ausgewählt aus der Gruppe bestehend aus Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, Glasflakes, Glaskugeln, Hohlglaskugeln, hohlkugeligen Silikatfüllstoffen und Mischungen hiervon.

9. Polyamid-Formmasse nach einem der vorhergehenden Ansprüche, **dadurch gekennzeichnet, dass** der mindestens eine Zusatzstoff ausgewählt ist aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Polyamid-Oligomere, Kohlenstoffnanoröhrchen, photochromen Agenzien, Antistatika, Entformungsmitteln, Antiblockmitteln, kettenverlängernden Additiven, kettenverkürzenden Additiven, optischen Aufhellern, IR-Absorbern, NIR-Absorbern, halogenfreien Flammschutzmitteln, metallischen Pigmenten, Metallflittern, metallbeschichteten Partikeln und Mischungen davon.

10. Polyamid-Formmasse nach einem der vorhergehenden Ansprüche, **dadurch gekennzeichnet, dass** die Polyamid-Formmasse mindestens eine der folgenden Eigenschaften aufweist:
• eine Glasübergangstemperatur im Bereich von 50 bis 200 °C, bevorzugt von 60 bis 190 °C, besonders bevorzugt im Bereich von 65 bis 90 °C und/oder
• eine Schmelztemperatur im Bereich von 100 bis 260 °C, bevorzugt von 205 bis 245 °C, besonders bevorzugt im Bereich von 210 bis 235 °C und/oder
• eine Kristallisationstemperatur im Bereich von 130 bis 200 °C, bevorzugt im Bereich von 140 bis 200 °C und/oder
• eine Kristallisationsgeschwindigkeit im Bereich von 13 bis 50 J/g min, besonders bevorzugt im Bereich von 15 bis 47 J/g min, ganz besonders bevorzugt im Bereich von 23 bis 45 J/g min.

11. Polyamid-Formmasse nach einem der vorhergehenden Ansprüche, **dadurch gekennzeichnet, dass** ein aus der Polyamid-Formmasse hergestellter Formkörper mindestens eine der folgenden Eigenschaften aufweist:
• ein aus der Polyamid-Formmasse hergestellter Formkörper einen Zug-E-Modul bestimmt nach ISO 527 von mindestens 5000 MPa, bevorzugt mindestens 8000 MPa, besonders bevorzugt mindestens 12000 MPa aufweist; und/oder
• einen Glanzwert bei 60° im trockenen Zustand, bestimmt nach DIN EN 2813 (2015), von 70 bis 100 GU und/oder
• einen Glanzwert bei 60° im konditionierten Zustand, bestimmt nach DIN EN 2813 (2015), von 60 bis 100 GU.

12. Formkörper herstellbar aus einer Polyamid-Formmasse nach einem der vorhergehenden Ansprüche.

13. Formkörper nach Anspruch 11,
**dadurch gekennzeichnet, dass** der Formkörper ausgewählt ist aus der Gruppe bestehend aus unlackierten Sichtteilen mit oder ohne Funktion, im Fahrzeuginnenraum oder Kofferraum, Haushalt, Maschinenbau, an Elektrogeräten, Elektronikgeräten, Haushaltsgeräten, Möbeln, insbesondere Lüfterlamellen, Schalthebel, Schaltwippen, Tasten, Drehreglern, Haltegriffen, Bedienelementen der Sitzverstellung, Bedienelementen an der Lenksäule, Bedienhebeln, Bedienelementen, Schubladen, Halterungen für Zusatzgeräte, Getränkehaltern, Gepäckhaken, Abdeckungen, Lichtschaltern, Rasierkopf, Scherenteile, Gewindestangen, insbesondere für Insulinpumpen, Gehäusen und Dekorelementen.

14. Verwendung der Polyamid-Formmasse nach einem der Ansprüche 1 bis 10 zur Herstellung von unlackierten Sichtteilen mit oder ohne Funktion, im Fahrzeuginnenraum oder Kofferraum, Haushalt, Maschinenbau, an Elektrogeräten, Elektronikgeräten, Haushaltsgeräten, Möbeln, insbesondere Lüfterlamellen, Schalthebel, Schaltwippen, Tasten, Drehreglern, Haltegriffen, Bedienelementen der Sitzverstellung, Bedienelementen an der Lenksäule, Bedienhebeln, Bedienelementen, Schubladen, Halterungen für Zusatzgeräte, Getränkehaltern, Gepäckhaken, Abdeckungen, Lichtschaltern, Rasierkopf, Scherenteile, Gewindestangen, insbesondere für Insulinpumpen, Gehäusen und Dekorelementen.

## Claims

1. A polyamide moulding compound comprising the following components (A) to (C) or consisting of the these components:
(A) 22 to 70 wt% of a semi-crystalline copolyamide formed from the monomers (a1) to (a5):
(a1) 20 to 37.5 mol% 1,6-hexanediamine;
(a2) 12.5 to 35 mol% 1,34-bis(aminomethyl)cyclohexane;
(a3) 0 to 5 mol% at least one diamine with 2 to 35 carbon atoms, differing from monomers (a1) and (a2);
(a4) 45 to 50 mol% 1,6-hexanedioic acid; and
(a5) 0 to 5 mol% at least one dicarboxylic acid with 2 to 44 carbon atoms, differing from monomer (a4);
where the proportions of the monomers (a1), (a2), and (a3) are with respect to the sum of the diamines used and add up to 50 mol%; and
where the proportions of the monomers (a4) and (a5) are with respect to the sum of the dicarboxylic acids used and add up to 50 mol%; and
where the proportions of the monomers (a1) to (a5) add up to 100%;
(B) 30 to 70% by weight of at least one filler; and
(C) 0 to 8 wt% of at least one additive,
where component (C) differs from component (B), and where the proportion of components (A) to (C) add up to 100 wt%.

2. A polyamide moulding material in accordance with claim 1, **characterized in that**
The proportion of component (A) in the polyamide moulding compound is in the range from 29 to 64.9 wt% and preferably in the range from 36 to 59.8 wt%, with respect to the total weight of the polyamide moulding; and/ or
the proportion of component (B) in the polyamide moulding compound is in the range from 35 to 65 wt%, and preferably in the range from 40 to 60 wt%, with respect to the total weight of the polyamide moulding compound; and/ or
the proportion of component (C) in the polyamide moulding compound is in the range from 0.1 to 6 wt% and preferably in the range from 0.2 to 4 wt%, with respect to the total weight of the polyamide moulding compound.

3. A polyamide moulding compound in accordance with one of the preceding claims,
**characterized in that**
• the proportion of monomer (a1) in the semi-crystalline copolyamide is in the range from 20 to 35 mol-%, preferably in the range from 22 to 32.5 mol%, particularly preferably in the range from 25 to 32.5 mol%; and/or
• the proportion of monomer (a2) in the copolyamide is in the range from 15 to 25 mol%, preferably in the range from 17.5 to 22.5 mol%;
• the proportion of monomer (a3) in the copolyamide is in the range from 0 to 2.5 mol-%,
where the proportions of the monomers (a1), (a2), and (a3) are with respect to the sum of the diamines used and add up to 50 mol%.

4. A polyamide moulding compound in accordance with one of the preceding claims,
**characterized in that**
• the proportion of monomer (a4) in the copolyamide is in the range from 47.5 to 2.5 mol%; and/ or
• the proportion of monomer (a5) in the copolyamide is in the range from 0 to 2.5 mol-%,
where the proportions of the monomers (a4) and (a5) are with respect to the sum of the dicarboxylic acids used and add up to 50 mol%.

5. A polyamide moulding material in accordance with one of the preceding claims,
**characterized in that**
the at least one monomer (a3) is selected from the group consisting of ethylenediamine, butanediamine, pentanediamine, methylpentanediamine, 1,8-octanediamine, methyloctanediamine, 1,9, nonanediamine, 1,10-decanediamine, 1,11-undecanediamine, 1,12-dodecanediamine, trimethylhexamethylenediamine, 1,4-cyclohexanediamine, 1,3-cyclohexanediamine, bis-4-amino-3-methyl-cyclohexyl)methane, bis-(4-amino-cyclohexyl)methane, isophoronediamine, 1,4-bis(aminomethyl)cyclohexane, m-xylylenediamine, p-xylylenediamine bis(aminocyclohexyl)propane and its alkyl derivatives, norbornanediamine and bis(aminomethyl)norbornane; and/or
the at least one monomer (a5) is selected from the group consisting of isophthalic acid, terephthalic acid, naphthalene dicarboxylic acid, 1,9-nonanedioic acid, 1,10-decanedioic acid, 1,11-undecanedioic acid, 1, 12-dodecanedioic acid, 1,13-tridecanedioic acid, 1,14-tetradecanedioic acid, 1,15-pentadecanoic acid, 1,16-hexadecanedioic acid, 1,17-heptadecanedioic acid, 1,18-octadecanedioic acid, arachidic acid, Japan acid, behenic acid, cyclohexanedioic acid, phenylindanedicarboxylic acid, phenylenediooxydiacetic acid, and dimer fatty acid with 35 or 44 carbon atoms.

6. A polyamide moulding material in accordance with one of the preceding claims,
**characterized in that** the at least one filler (B) is selected from the group consisting of fibrous or acicular fillers, particle-shaped fillers, and mixtures thereof that are optionally coated or surface treated.

7. A polyamide moulding compound in accordance with the preceding claim,
**characterized in that** the fibrous or acicular fillers are selected from the group consisting of glass fibers, carbon fibers, basalt fibers, slag fibers, metal fibers, whiskers, mineral fibers, Wollastonite, ground glass fibers, ground carbon fibers, ground mineral fibers and mixtures thereof, preferably selected from the group consisting of glass fibers, carbon fibers, basalt fibers, and mixtures thereof.

8. A polyamide moulding compound in accordance with claim 6,
**characterized in that**
the particle-shaped fillers are preferably selected from the group consisting of dolomite, silicates, quartz, talcum, mica, kaolin, perlite, silica, precipitated or pyrogenic silicon dioxide, diatomite, titanium dioxide, magnesium carbonate, magnesium hydroxide, aluminum hydroxide, ground or precipitated calcium carbonate, chalk, calcium, limestone dust, slate flour, feldspar, barium carbonate, barium sulfate, synthetic sheet silicates, natural sheet silicates, permanent magnetic or magnetizable metals or alloys, glass flakes, glass spheres, hollow glass spheres, hollow spherical silicate fillers, and mixtures thereof, preferably selected from the group consisting of silicates, quartz, talcum, mica, kaolin, perlite, silica, precipitated or pyrogenic silicon dioxides, diatomite, titanium dioxide, magnesium carbonate, magnesium hydroxide, aluminum hydroxide, ground or precipitated calcium carbonate, chalk, calcium, limestone dust, slate flour, feldspar, barium carbonate, barium sulfate, synthetic sheet silicates, natural sheet silicates, glass flakes, glass spheres, hollow glass spheres, hollow spherical silicate fillers, and mixtures thereof.

9. A polyamide moulding material in accordance with one of the preceding claims,
**characterized in that** the at least one additive is selected from the group consisting of inorganic and organic stabilizers, in particular antioxidants, antiozonants, light stabilizers, in particular UV stabilizers, UV absorbers, or UV blockers, mold lubricants, dyestuffs, marking agents, pigments, black carbon, graphite, graphene, polyamide oligomers, carbon nanotubes, photochromic agents, static inhibitors, demoulding means, antiblocking agents, chain extending additives, chain shortening additives, optical brighteners, IR absorbers, NIR absorbers, non-halogen flameproofing agents, metallic pigments, metallic flakes, metal-coated particles and mixtures thereof.

10. A polyamide moulding material in accordance with one of the preceding claims,
**characterized in that** the polyamide moulding compound has at least one of the following properties:
• a glass transition temperature in the range from 50 to 200°C, preferably from 60 to 190°C, particularly preferably in the range from 65 to 90°C; and/or
• a melting temperature in the range from 100 to 260 °C, preferably from 205 to 245 °C, particularly preferably in the range from 210 to 235 °C.; and/or
• a crystallization temperature in the range from 60 to 190°C, preferably in the range from 140 to 200 °C.; and/or
• a crystallization rate in the range from 13 to 50 J/g min, particularly preferably in the range from 15 to 47 J/g min, very particularly preferably in the range from 23 to 45J/g min.

11. A polyamide moulding material in accordance with one of the preceding claims,
**characterized in that** a moulding manufactured from the polyamide moulding compound has at least one of the following properties:
• a moulding manufactured from the polyamide moulding compound has a modulus of elasticity determined in accordance with ISO 527 of at least 5000 MPa, preferably at least 8000 MPa, particularly preferably at least 12000 MPa; and/or
• a gloss value of 70 to 100 GU determined in accordance with DIN EN 2813 (2015) in the dry state at 60°; and/or
• a gloss value of 60 to 100 GU determined in accordance with DIN EN 2813 (2015) in the conditioned state at 60°.

12. A moulding manufactured from a polyamide moulding compound in accordance with one of the preceding claims

13. A moulding in accordance with claim 11,
**characterized in that** the moulding is selected from the group consisting of non-lacquered visible parts with or without a function, in a car passenger compartment or trunk, in the household, mechanical engineering, on electrical devices, electronic devices, domestic appliances, furniture, in particular fan blades, gear sticks, rocker switches, buttons, rotary controls, straps, operating elements for seat adjustment, operating elements on the steering column, operating levers, operating elements, drawers, holders for accessories, drink holders, luggage hooks, covers, light switches, razor head, scissor parts, threaded rods, in particular for insulin pumps, housings, and decor elements.

14. Use of the polyamide moulding compound in accordance with one of the claims 1 to 10 for the manufacture of non-lacquered visible parts with or without a function, in a car passenger compartment or trunk, in the household, mechanical engineering, on electrical devices, electronic devices, domestic appliances, furniture, in particular fan blades, gear sticks, rocker switches, buttons, rotary controls, straps, operating elements for seat adjustment, operating elements on the steering column, operating levers, operating elements, drawers, holders for accessories, drink holders, luggage hooks, covers, light switches, razor head, scissor parts, threaded rods, in particular for insulin pumps, housings, and decor elements.

## Revendications

1. Matière à mouler en polyamide contenant les composants (A) à (C) suivants ou constituée de ces composants :
(A) 22 à 70 % en poids d'un copolyamide partiellement cristallin formé des monomères (a1) à (a5) :
(a1) 20 à 37,5 % en moles de 1,6-hexanediamine ;
(a2) 12,5 à 25 % en moles de 1,3-bis(aminométhyle)-cyclohexane ;
(a3) 0 à 5 % en moles d'au moins une diamine avec 2 à 35 atomes de carbone, différente des monomères (a1) et (a2) ;
(a4) 45 à 50 % en moles d'acide 1,6-hexanedioïque ; et
(a5) 0 à 5 % en moles d'au moins un acide dicarboxylique avec 2 à 44 atomes de carbone, différent du monomère (a4) ;
dans laquelle les pourcentages des monomères (a1), (a2) et (a3) sont rapportés à la somme des diamines utilisées et se complètent au total à 50 % en moles ; et
dans laquelle les pourcentages des monomères (a4) et (a5) sont rapportés à la somme des acides dicarboxyliques utilisés et se complètent au total à 50 % en moles ; et
dans laquelle les monomères (a1) à (a5) se complètent au total à 100 % en moles ;
(B) 30 à 70 % en poids d'au moins une charge ; et
(C) 0 à 8 % en poids d'au moins un additif;
dans laquelle le composant (C) est différent du composant (B) et dans laquelle les proportions des composants (A) à (C) se complètent au total à 100 % en poids.

2. Matière à mouler en polyamide selon la revendication 1,
**caractérisé en ce que**
le pourcentage de composant (A) dans la matière à mouler en polyamide se situe dans la plage de 29 à 64,9 % en poids et de préférence dans la plage de 36 à 59,8 % en poids, rapporté au poids total de la matière à mouler en polyamide, et/ou
le pourcentage de composant (B) dans la matière à mouler en polyamide se situe dans la plage de 35 à 65 % en poids, de préférence dans la plage de 40 à 60 % en poids, rapporté au poids total de la matière à mouler en polyamide, et/ou
le pourcentage de composant (C) dans la matière à mouler se situe dans la plage de 0,1 à 6 % en poids et de préférence dans la plage de 0,2 à 4 % en poids, rapporté au poids total de la matière à mouler en polyamide.

3. Matière à mouler en polyamide selon l'une quelconque des revendications précédentes, **caractérisée en ce que**
• le pourcentage de monomère (a1) dans le copolyamide se situe dans la plage de 20 à 35 % en moles, de préférence dans la plage de 22 à 32,5 % en moles, et particulièrement de préférence dans la plage de 25 à 32,5 % en moles ;
et/ou
• le pourcentage de monomère (a2) dans le copolyamide se situe dans la plage de 15 à 25 % en moles, de préférence dans la plage de 17,5 à 22,5 % en moles ;
• le pourcentage de monomère (a3) dans le copolyamide se situe dans la plage de 0 à 2,5 % en moles ;
dans laquelle les pourcentages des monomères (a1), (a2) et (a3) sont rapportés à la somme des diamines utilisées et se complètent au total à 50 % en moles.

4. Matière à mouler en polyamide selon l'une quelconque des revendications précédentes, **caractérisée en ce que**
• le pourcentage de monomère (a4) dans le copolyamide se situe dans la plage de 47,5 à 50 % en moles ; et/ou
• le pourcentage de monomère (a5) dans le copolyamide se situe dans la plage de 0 à 2,5 % en moles ;
dans laquelle les pourcentages des monomères (a4) et (a5) sont rapportés à la somme des acides dicarboxyliques utilisés et se complètent au total à 50 % en moles.

5. Matière à mouler en polyamide selon l'une quelconque des revendications précédentes, **caractérisée en ce que**
le au moins un monomère (a3) est choisi dans le groupe constitué par l'éthylènediamine, la butanediamine, la pentanediamine, la méthylpentanediamine, la 1,8-octanediamine, la méthyloctanediamine, la 1,9-nonanediamine, la 1,10-décanediamine, la 1,11-undécanediamine, la 1,12-dodécanediamine, la triméthylhexaméthylendiamine, la 1,4-cyclohexandiamine, la 1,3-cyclohexandiamine, le Bis-(4-amino-3-méthyl-cyclohexyl)-méthane, le Bis-(4-amino-cyclohexyl)-méthane, la isophorondiamine, la 1,4-Bis(aminométhyl)-cyclohéxane, la m-xylylendiamine, la p-xylylendiamine, le Bis(aminocyclohexyl)propane et ses dérivés alkyles, la norbornandiamine et la Bis(aminométhyl)norbornane et/ou
le au moins un monomère (a5) est choisi dans le groupe constitué par l'acide isophtalique, l'acide téréphtalique, l'acide naphtalènedicarboxylique, l'acide 1,9-nonanedioïque, l'acide 1,10-décanedioïque, l'acide 1,11-undécanedioïque, l'acide 1,12-dodécanedioïque, l'acide 1,13-tridécanedioïque, l'acide 1,14-tétradécanedioïque, l'acide 1,15-pentadécanedioïque, l'acide 1,16-hexadécanedioïque, l'acide 1,17-heptadécanedioïque, l'acide 1,18-octadécanedioïque, l'acide arachique, l'acide japonais, l'acide béhénique, l'acide cycloheaxanedioïque, l'acide phénylindanedicarboxylique, l'acide phénylènedioxydiacétique et l'acide gras dimère avec 36 ou 44 atomes de carbone.

6. Matière à mouler en polyamide selon l'une quelconque des revendications précédentes, **caractérisée en ce que** la au moins une charge (B) est choisie dans le groupe constitué par les charges fibreuses ou aciculaires, les charges particulaires et leurs mélanges, qui sont éventuellement enrobées ou traitées en surface.

7. Matière à mouler en polyamide selon l'une quelconque des revendications précédentes, **caractérisée en ce que** les charges fibreuses ou aciculaires sont choisies dans le groupe constitué par les fibres de verre, les fibres de carbone, les fibres de basalte, les fibres de laitier, les fibres métalliques, les trichites, les fibres minérales, la wollastonite, les fibres de verre broyées, les fibres de carbone broyées, les fibres minérales broyées et leurs mélanges, de préférence choisies dans le groupe constitué par les fibres de verre, les fibres de carbone, les fibres de basalte et leurs mélanges.

8. Matière à mouler en polyamide selon la revendication 6, **caractérisée en ce que** les charges particulaires sont choisies dans le groupe constitué par le dolomite, les silicates, le quartz, le talc, le mica, le kaolin, la perlite, la silice, les acides siliques précipités ou pyrogénés, la terre de diatomées, le dioxyde de titane, le carbonate de magnésium, l'hydroxyde de magnésium, l'hydroxyde d'aluminium, le carbonate de calcium broyé ou précipité, la craie, la chaux, la poudre de calcaire, la poudre d'ardoise, le feldspath, le carbonate de baryum, le sulfate de baryum, les phyllosilicates synthétiques, les phyllosilicates naturels, les métaux ou alliages à aimantation permanente ou magnétisables, les paillettes de verre, les billes de verre, les billes de verre creuses, les silicates sphériques creux, et leurs mélanges, de préférence choisies dans le groupe constitué par les silicates, le quartz, le talc, le mica, le kaolin, la perlite, la silice, les acides siliques précipités ou pyrogénés, la terre de diatomées, le dioxyde de titane, le carbonate de magnésium, l'hydroxyde de magnésium, l'hydroxyde d'aluminium, le carbonate de calcium broyé ou précipité, la craie, la chaux, la poudre de calcaire, la poudre d'ardoise, le feldspath, le carbonate de baryum, le sulfate de baryum, les phyllosilicates synthétiques, les phyllosilicates naturels, les paillettes de verre, les billes de verre, les billes de verre creuses, les charges de silicate sphériques creuses et leurs mélanges.

9. Matière à mouler en polyamide selon l'une quelconque des revendications précédentes, **caractérisée en ce que** le au moins un additif est choisi dans le groupe constitué par des stabilisants inorganiques et organiques, en particulier des antioxydants, des antiozonants, des agents de protection contre la lumière, en particulier des stabilisants UV, des absorbeurs UV ou des bloqueurs UV, des lubrifiants, des colorants, des agents de marquage, des pigments, du noir de carbone, du graphite, du graphène, des oligomères de polyamide, des nanotubes de carbone, des agents photochromiques, des antistatiques, des agents de démoulage, des agents anti-blocage, des additifs d'allongement de chaîne, des additifs de raccourcissement de chaîne, des azurants optiques, des absorbeurs d'IR, des absorbeurs de NIR, des retardateurs de flamme sans halogène, des pigments métalliques, des paillettes métalliques, des particules revêtues de métal et leurs mélanges.

10. Matière à mouler en polyamide selon l'une quelconque des revendications précédentes, **caractérisée en ce que** la matière à mouler en polyamide présente au moins l'une des propriétés suivantes :
• une température de transition vitreuse dans la plage de 50 à 200 °C, de préférence de 60 à 190 °C, de manière particulièrement préférée dans la plage de 65 à 90 °C et/ou
• une température de fusion dans la plage de 100 à 260 °C, de préférence de 205 à 245 °C, de manière particulièrement préférée dans la plage de 210 à 235 °C ; et/ou
• une température de cristallisation dans la plage de 130 à 200 °C, de préférence dans la plage de 140 à 200 °C et/ou
• une vitesse de cristallisation dans la plage de 13 à 50 J/g min, de manière particulièrement préférée dans la plage de 15 à 47 J/g min, de manière tout à fait préférée dans la plage de 23 à 45 J/g min.

11. Matière à mouler en polyamide selon l'une quelconque des revendications précédentes, **caractérisée en ce qu'**un corps moulé fabriqué à partir de la matière à mouler en polyamide présente au moins l'une des propriétés suivantes :
• un corps moulé fabriqué à partir de la matière moulée en polyamide présente un module d'élasticité en traction déterminé selon la norme ISO 527 d'au moins 5 000 MPa, de préférence d'au moins 8 000 MPa, de manière particulièrement préférée d'au moins 12 000 MPa ; et/ou
• une valeur de brillance à 60° à l'état sec, déterminée selon la norme DIN EN 2 813 (2015), de 70 à 100 GU ; et/ou
• une valeur de brillance à 60° à l'état conditionné, déterminée selon la norme DIN EN 2 813 (2015), de 60 à 100 GU.

12. Corps moulé pouvant être fabriqué à partir d'une matière à mouler en polyamide selon l'une quelconque des revendications précédentes.

13. Corps moulé conforme à la revendication 11, **caractérisé en ce que** le corps moulé est choisi dans le groupe constitué par les pièces visibles non peintes avec ou sans fonction, dans l'habitacle du véhicule ou le coffre à bagages, le ménage, la construction mécanique, sur les appareils électriques, les appareils électroniques, les appareils ménagers, les meubles, en particulier les lamelles de ventilation, les leviers de vitesses, les palettes, les boutons, les régulateurs rotatifs, les poignées de maintien, les éléments de commande utilisateur du réglage des sièges, les éléments de commande utilisateur sur la colonne de direction, les leviers de commande utilisateur, les éléments de commande utilisateur, les tiroirs, les supports pour les accessoires, les porte-boissons, les crochets à bagages, les caches, les interrupteurs d'éclairage, les têtes de rasoir, les pièces de ciseaux, les tiges filetées, notamment pour les pompes à insuline, les boîtiers et les éléments de décoration.

14. Utilisation de la matière à mouler en polyamide selon l'une quelconque des revendications 1 à 10 pour la fabrication de pièces visibles non peintes avec ou sans fonction, dans l'habitacle du véhicule ou le coffre à bagages, le ménage, la construction mécanique, sur les appareils électriques, les appareils électroniques, les appareils ménagers, les meubles, en particulier les lamelles de ventilation, les leviers de vitesses, les palettes, les boutons, les régulateurs rotatifs, les poignées de maintien, les éléments de commande utilisateur du réglage des sièges, les éléments de commande utilisateur sur la colonne de direction, les leviers de commande utilisateur, les éléments de commande utilisateur, les tiroirs, les supports pour les accessoires, les porte-boissons, les crochets à bagages, les caches, les interrupteurs d'éclairage, les têtes de rasoir, les pièces de ciseaux, les tiges filetées, notamment pour les pompes à insuline, les boîtiers et les éléments de décoration.
